# EUROPEAN PATENT APPLICATION

(11) **EP 4 567 202 A1**
(43) Date of publication of application: **11.06.2025**
(21) Application number: 23882274.6
(22) Date of filing: 12.09.2023
(51) Int. Cl.: E02F 9/20, B60W 10/18, F16H 61/21

(54) **WORK MACHINE AND METHOD FOR CONTROLLING WORK MACHINE**

(30) Priority: 25.10.2022 JP 2022170728
(71) Applicant: Komatsu Ltd., Minato-ku Tokyo 107-8414 (JP)
(72) Inventor: KOUDOU, Koushirou, Tokyo 107-8414 (JP)
(74) Representative: Flügel Preissner Schober Seidel
(86) International application number: PCT/JP2023/033263
(87) International publication number: WO 2024/090061

(57) **Abstract**

A work machine includes an engine, a transmission, a travel device, a vehicle speed sensor, a hydraulic brake, a hydraulic temperature sensor, and a controller. The controller acquires a travel command for controlling the travel of the work machine. The controller acquires the vehicle speed. The controller determines a target driving power based on the travel command and the vehicle speed. The target driving power includes a positive driving power for causing the work machine to travel and a negative driving power for braking the work machine. The controller controls the engine and the transmission to achieve the target driving power. The controller acquires the hydraulic temperature. The controller determines, based on the hydraulic temperature, an assist braking power for assisting the braking power of the hydraulic brake. The controller determines the target driving power to achieve the assist braking power.

## Description

### [Technical Field]

The present disclosure relates to a work machine and a method for controlling the work machine.

### [Background Art]

Among work machines, there are work machines that include hydraulic brakes. For example, in the work machine in Patent Document No. 1, hydraulic fluid supplied to the hydraulic brakes is controlled in accordance with the operating amount of the brake pedal. Consequently, the braking power of the hydraulic brakes is controlled.

### [Prior Art Document]

### [Reference]

Patent Document No. 1: Japanese Patent No. 5412011

### [Summary of the Invention]

### [Problem to be Resolved by the Invention]

Work machines are used in severe work sites and large loads are applied to the brakes. For example, large loads are applied to the brakes due to the frequent use of the brakes per unit of time, the length of the continuous operating time, and the large weight of the work machine. As a result, the hydraulic fluid easily reaches high temperatures. An object of the present disclosure is to suppress overheating of hydraulic fluid in the hydraulic brakes of a work machine.

### [Means for Resolving the Problem]

A work machine according to an aspect of the present disclosure includes an engine, a transmission, a travel device, a vehicle speed sensor, a hydraulic brake, a hydraulic temperature sensor, and a controller. The transmission is connected to the engine. The travel device is connected to the transmission and causes the work machine to travel. The vehicle speed sensor detects the vehicle speed. The hydraulic brake brakes the travel device by being driven by hydraulic fluid. The hydraulic temperature sensor detects the hydraulic temperature of the hydraulic fluid.

The controller acquires a travel command for controlling the travel of the work machine. The controller acquires the vehicle speed. The controller determines a target driving power based on the travel command and the vehicle speed. The target driving power includes a positive driving power for causing the work machine to travel and a negative driving power for braking the work machine. The controller controls the engine and the transmission so as to achieve the target driving power. The controller acquires the hydraulic temperature. The controller determines, based on the hydraulic temperature, an assist braking power for assisting the braking power of the hydraulic brake. The controller determines the target driving power so as to achieve the assist braking power.

A method according to another aspect of the present invention is a method for controlling a work machine. The work machine includes an engine, a transmission, a travel device, and a hydraulic brake. The transmission is connected to the engine. The travel device is connected to the transmission and causes the work machine to travel. The hydraulic brake brakes the travel device by being driven by hydraulic fluid.

The method includes: acquiring a travel command for controlling the travel of the work machine; acquiring the vehicle speed; determining, based on the travel command and the vehicle speed, a target driving power that includes a positive driving power for causing the work machine to travel and a negative driving power for braking the work machine; controlling the engine and the transmission so as to achieve the target driving power; acquiring the hydraulic temperature of the hydraulic fluid; determining, based on the hydraulic temperature, an assist braking power for assisting the braking power of the hydraulic brake; and determining the target driving power so as to achieve the assist braking power.

### [Effect of the Invention]

According to the present disclosure, the assist braking power is determined based on the hydraulic temperature of the hydraulic brake. The braking power of the hydraulic brake is assisted by means of the assist braking power whereby the buildup of heat in the hydraulic brake is suppressed. Additionally, the assist braking power is achieved by means of the negative driving power, namely an engine brake, due to the engine and the transmission. As a result, overheating of the hydraulic fluid of the hydraulic brake is suppressed.

### [Brief Description of Drawings]

FIG. 1 is a side view of a work machine according to an embodiment.
FIG. 2 is a block diagram of a configuration of the work machine.
FIG. 3 is a block diagram illustrating a process for controlling the engine.
FIG. 4 illustrates an example of driving power data.
FIG. 5 illustrates the driving power data based on a brake assist control.
FIG. 6 is a flow chart illustrating a process for the brake assist control.
FIG. 7 illustrates an example of assist braking data.
FIG. 8 illustrates the relationship between the brake operating amount and the braking power in the brake assist control.
FIG. 9 illustrates assist braking data according to a first modified example.
FIG. 10 illustrates assist braking data according to a second modified example.

### [Description of Embodiments]

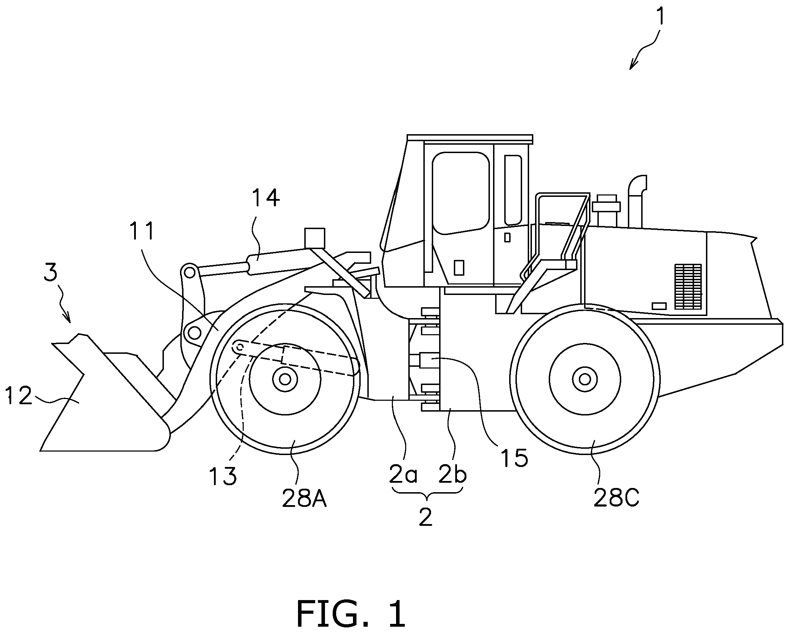

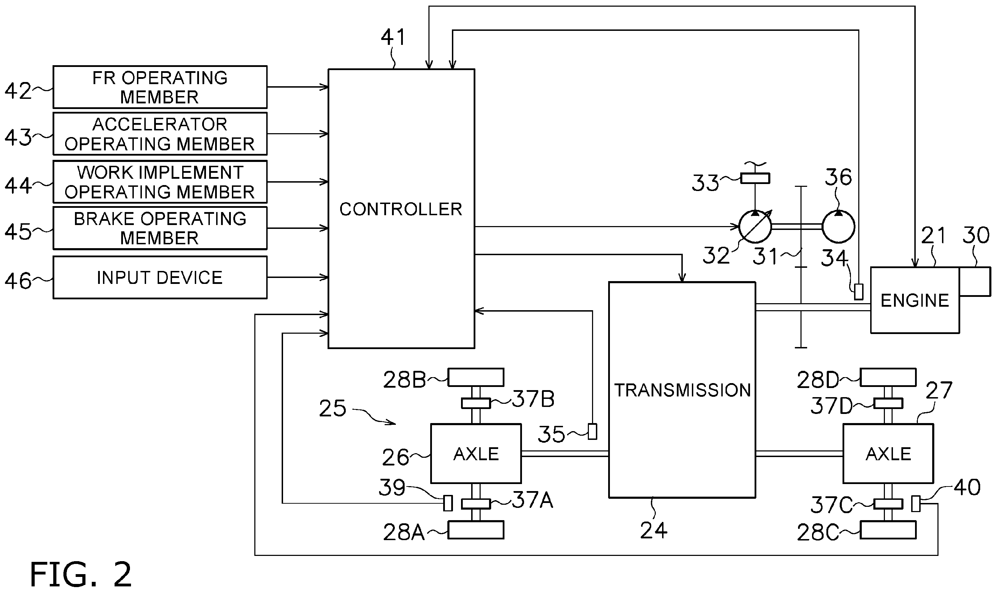

An embodiment of the present disclosure will be explained with reference to the figures. FIG. 1 is a side view of a work machine 1 according to the embodiment. FIG. 2 is a block diagram of a configuration of the work machine 1. The work machine 1 according to the present embodiment is a wheel loader. As illustrated in FIG. 1, the work machine 1 includes a vehicle body 2 and a work implement 3.

The vehicle body 2 includes a front vehicle body 2a and a rear vehicle body 2b. The rear vehicle body 2b is connected so as to be swingable to the left and right with respect to the front vehicle body 2a. The front vehicle body 2a and the rear vehicle body 2b are coupled by a hydraulic cylinder 15. The hydraulic cylinder 15 extends and contracts whereby the front vehicle body 2a turns to the left and right with respect to the rear vehicle body 2b.

The work implement 3 is used for work such as excavation. The work implement 3 is movably attached to the front vehicle body 2a. The work implement 3 includes a boom 11, a bucket 12, and hydraulic cylinders 13 and 14. The hydraulic cylinders 13 and 14 extend and contract thereby moving the boom 11 and the bucket 12.

As illustrated in FIG. 2, the work machine 1 includes an engine 21, a transmission 24, and a travel device 25. The engine 21 is, for example, a diesel engine. The engine 21 includes a fuel injection device 30. The fuel injection device 30 adjusts the amount of fuel injected into the cylinders of the engine 21 thereby controlling the output of the engine 21.

The transmission 24 is connected to the engine 21. The transmission 24 transmits the driving power from the engine 21 to the travel device 25. For example, the transmission 24 is a hydraulic mechanical transmission (HMT). The HMT includes a planetary gear mechanism, a hydraulic pump/motor, and a clutch. The HMT is configured to change the transmission gear ratio to stageless by controlling the displacement of the hydraulic pump/motor.

However, the transmission 24 may be another type of transmission such as an electric mechanical transmission (EMT) or a hydro-static transmission (HST). Alternatively, the transmission 24 may be a transmission having a torque converter and a plurality of speed change gears.

The travel device 25 is mounted to the vehicle body 2 and causes the vehicle body to travel by being driven with driving power from the engine 21. The travel device 25 includes axles 26 and 27, front wheels 28A and 28B, and rear wheels 28C and 28D. The axles 26 and 27 are connected to the transmission 24. The front wheels 28A and 28B are provided to the front vehicle body 2a. The rear wheels 28C and 28D are provided to the rear vehicle body 2b. The axle 26 transmits the driving power from the transmission 24 to the front wheels 28A and 28B. The axle 27 transmits the driving power from the transmission 24 to the rear wheels 28C and 28D.

The work machine 1 includes a PTO (power take-off) 31, a work implement pump 32, and a control valve 33. The PTO 31 distributes the driving power of the engine 21 between the transmission 24 and the work implement pump 32. Only one work implement pump 32 is illustrated in FIG. 2. However, two or more hydraulic pumps may be connected to the engine 21 via the PTO 31.

The work implement pump 32 is connected to the engine 21 via the PTO 31. The work implement pump 32 is a hydraulic pump. The work implement pump 32 is driven by the engine 21 and discharges hydraulic fluid. The hydraulic fluid discharged from the work implement pump 32 is supplied to the abovementioned hydraulic cylinders 13 to 15. The control valve 33 controls the flow rate of the hydraulic fluid supplied from the work implement pump 32 to the hydraulic cylinder 13 to 15. The control valve 33 is, for example, an electromagnetic proportional control valve and is controlled in accordance with input electrical signals. Alternatively, the control valve 33 may be a pressure proportional control valve and may be controlled in accordance with input pilot pressures.

The work machine 1 includes a brake pump 36 and hydraulic brakes 37A to 37D. The brake pump 36 is driven by the engine 21 and discharges hydraulic fluid. The hydraulic fluid discharged by the brake pump 36 is supplied to the hydraulic brakes 37A to 37D. The hydraulic brakes 37A to 37D brake the travel device 25 by being driven by the hydraulic fluid. The hydraulic brakes 37A to 37D are, for example, wet multi-disc brakes. Specifically, the hydraulic brakes 37A to 37D include front brakes 37A and 37B and rear brakes 37C and 37D. The front brakes 37A and 37B brake the front wheels 28A and 28B. The rear brakes 37C and 37D brake the rear wheels 28C and 28D.

The work machine 1 includes an engine sensor 34 and a vehicle speed sensor 35. The engine sensor 34 detects the engine rotation speed. The vehicle speed sensor 35 detects the vehicle speed. The vehicle speed sensor 35 detects, for example, the output rotation speed of the travel device 25 as the vehicle speed. The output rotation speed of the travel device 25 corresponds to the vehicle speed of the work machine 1. The output rotation speed of the travel device 25 is, for example, the rotation speed of the output shaft of the transmission 24. However, the output rotation speed may be the rotation speed of another rotating element that is inside the transmission 24 or is positioned downstream of the transmission 24.

The work machine 1 includes a first hydraulic temperature sensor 39 and a second hydraulic temperature sensor 40. The first hydraulic temperature sensor 39 and the second hydraulic temperature sensor 40 detect the temperature (referred to below as brake hydraulic temperature) of the hydraulic fluid for driving the hydraulic brakes 37A to 37D. The first hydraulic temperature sensor 39 detects the brake hydraulic temperature of the front brakes 37A and 37B. The second hydraulic temperature sensor 40 detects the brake hydraulic temperature of the rear brakes 37C and 37D.

The work vehicle 1 includes a controller 41. The controller 41 includes a processor such as a central processing unit (CPU), and a storage device such as a RAM or a ROM. The controller 41 may include an auxiliary storage device such as a hard disk or a solid state drive (SSD). The controller 41 stores programs and data for controlling the work machine 1. The controller 41 executes processes for controlling the work machine 1 in accordance with the stored programs and data.

The controller 41 receives a signal indicating the engine rotation speed from the engine sensor 34. The controller 41 receives a signal indicating the output rotation speed from the vehicle speed sensor 35. The controller 41 receives signals indicating the brake hydraulic temperatures of the hydraulic brakes 37A to 37D from the hydraulic temperature sensors 39 and 40. The controller 41 receives a signal indicating the brake hydraulic temperature of the front brakes 37A and 37B from the first hydraulic temperature sensor 39. The controller 41 receives a signal indicating the brake hydraulic temperature of the rear brakes 37C and 37D from the second hydraulic temperature sensor 40.

The controller 41 controls the output of the engine 21 by transmitting a command signal to the engine 21. The controller 41 switches between the forward travel gear and the rearward travel gear of the transmission 24 by transmitting a command signal to the transmission 24. The controller 41 controls the transmission gear ratio of the transmission 24 by transmitting a command signal to the transmission 24. The controller 41 controls the work implement 3 by transmitting command signals to the hydraulic pump 32 and the control valve 33.

The work machine 1 includes an FR operating member 42, an accelerator operating member 43, a work implement operating member 44, a brake operating member 45, and an input device 46. The FR operating member 42 is operable by the operator for switching between forward travel and reverse travel of the work machine 1. The FR operating member 42 is operable in a forward travel position and a reverse travel position from a neutral position. The FR operating member 42 is, for example, a lever. However, the FR operating member 42 may be another member such as a switch or a pedal.

The accelerator operating member 43 is operable by the operator for controlling the vehicle speed of the work machine 1. The accelerator operating member 43 is, for example, a pedal. However, the accelerator operating member 43 may be another member such as a lever or a switch. The work implement operating member 44 is operable by the operator for controlling the work implement 3. The work implement operating member 44 is, for example, a lever. However, the work implement operating member 44 may be another member such as a switch or a pedal.

The brake operating member 45 is operable by the operator for driving the hydraulic brakes 37A to 37D. The brake operating member 45 is, for example, a pedal. However, the brake operating member 45 may be another member such as a lever or a switch. The hydraulic pressure of the hydraulic fluid supplied to the hydraulic brakes 37A to 37D is controlled in accordance with the operation of the brake operating member 45. Consequently, the hydraulic brakes 37A to 37D are caused to generate a braking power in accordance with the operating amount of the brake operating member 45.

The input device 46 is operable by the operator for setting the control of the work machine 1. For example, the input device 46 sets the work machine 1 in accordance with an operation by the operator. The input device 46 includes, for example, a touch screen. However, the input device 46 may include another member such as a mechanical switch.

The controller 41 receives a signal indicating the operating position of the FR operating member 42 from the FR operating member 42. The controller 41 switches between the forward travel gear and the rearward travel gear of the transmission 24 in accordance with the signal from the FR operating member 42. The controller 41 receives a signal indicating an accelerator operating amount from the accelerator operating member 43. The accelerator operating amount is the operating amount of the accelerator operating member 43.

The controller 41 receives a signal indicating a brake operating amount from the brake operating member 45. The brake operating amount is the operating amount of the brake operating member 45. The controller 41 receives a signal indicating a work implement operating amount from the work implement operating member 44. The work implement operating amount is the operating amount of the work implement operating member 44. The controller 41 receives a signal indicating the setting of the work machine 1 from the input device 46.

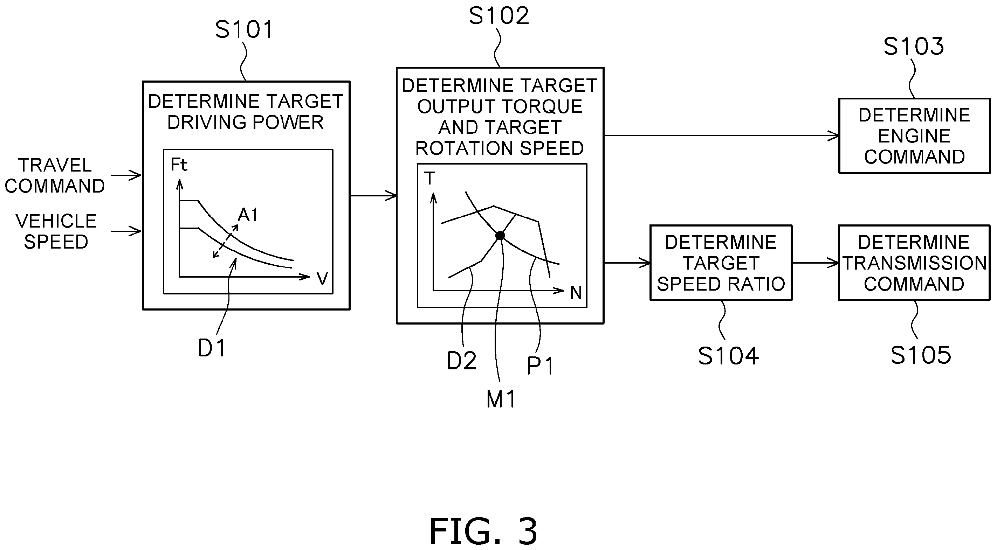

A process for controlling the engine 21 executed by the controller 41 is explained hereinbelow. FIG. 3 is a block diagram illustrating a process for controlling the engine 21.

As illustrated in step S101 in FIG. 3, the controller 41 determines a target driving power. The target driving power is the driving power required for causing the work machine 1 to travel with the travel device 25. The controller 41 acquires a travel command for controlling the travel of the work machine and the vehicle speed. The controller determines the target driving power based on the travel command and the vehicle speed.

Specifically, the controller 41 acquires the accelerator operating amount as the travel command. The controller 41 stores driving power data D1. The driving power data D1 defines the relationship of the target driving power (Ft) of the work machine 1 with respect to the vehicle speed (V) and the accelerator operating amount (A1). The controller 41 refers to the driving power data D1 to determine the target driving power (Ft) from the vehicle speed (V) and the accelerator operating amount (A1).

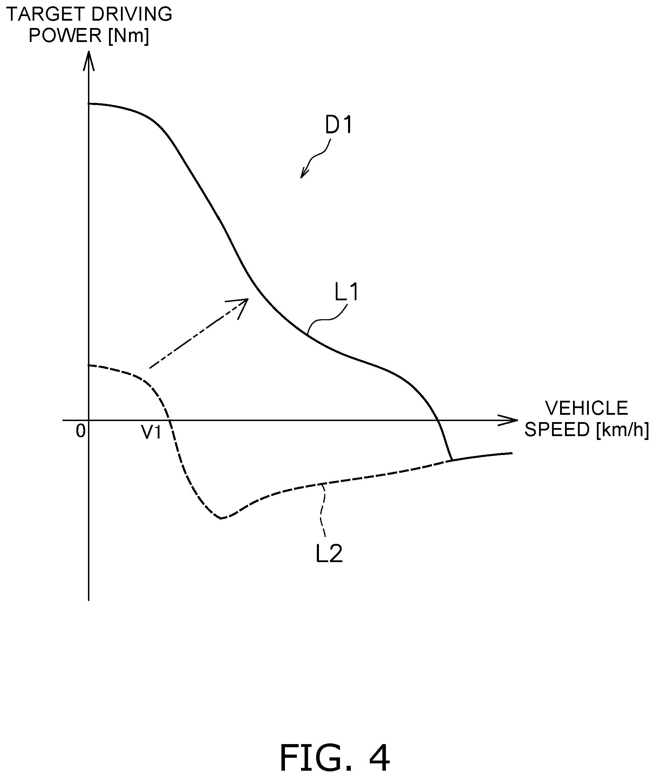

FIG. 4 illustrates an example of the driving power data D1. In FIG. 4, the solid line L1 depicts the driving power data when the accelerator operating amount is 100%. In FIG. 4, the dashed line L2 depicts the driving power data when the accelerator operating amount is 0%. The driving power data D1 changes such that the target driving power increases with respect to the vehicle speed in response to an increase in the accelerator operating amount.

As illustrated in FIG. 4, the target driving power includes positive values and negative values. The target driving power of the positive values indicates a positive driving power for causing the work machine 1 to travel. The target driving power of the negative values indicates a negative driving power for braking the work machine 1, that is braking by means of an engine brake. For example, when the accelerator operating amount is 0% as indicated by the driving power data L2, the controller 41 generates braking power with the engine brake when the vehicle speed is greater than V1.

In step S102, the controller 41 determines a target output torque and a target rotation speed of the engine 21. The controller 41 determines the target output torque (T) and the target rotation speed (N) of the engine 21 from the target driving power and the vehicle speed. For example, the controller 41 stores target matching data D2. The target matching data D2 defines the relationship between the target output torque (T) and the target rotation speed (N) of the engine 21. The controller 41 calculates a target output horsepower of the engine 21 from the target driving power and the vehicle speed. The controller 41 determines the target output torque (T) and the target rotation speed (N) of the engine 21 from an intersection M1 of a line P1 that indicates the target output horsepower and a line that indicates the target matching data D2.

In step S103, the controller 41 determines an engine command. The controller 41 determines a throttle command for the fuel injection device 30 in accordance with the target output torque (T) of the engine 21 determined as described above, as the engine command. Consequently, the output of the engine 21 is controlled so that the target output torque (T) is achieved.

In step S104, the controller 41 determines a target speed ratio of the transmission. The controller 41 determines the target speed ratio of the transmission from the target rotation speed (N) of the engine 21 and the vehicle speed. The speed ratio of the transmission indicates the ratio between the output rotation speed and the input rotation speed of the transmission.

In step S105, the controller 41 determines a transmission command. The controller 41 determines the transmission command so that the target speed ratio is achieved with the transmission. For example, when the transmission is an HMT, the transmission command includes a displacement instruction for the hydraulic pump/motor and a command for the clutch. The engine 21 and the transmission 24 are controlled as described above whereby the target driving power is achieved in accordance with the vehicle speed and the accelerator operating amount as illustrated in FIG. 4.

In the work machine 1 according to the present embodiment, the controller 41 executes a brake assist control for assisting the braking power of the hydraulic brakes 37A to 37D when the brake operating member 45 is operated. When the brake operating member 45 is operated in the brake assist control, the braking power of the hydraulic brakes 37A to 37D is assisted by increasing the abovementioned braking power with the engine brake.

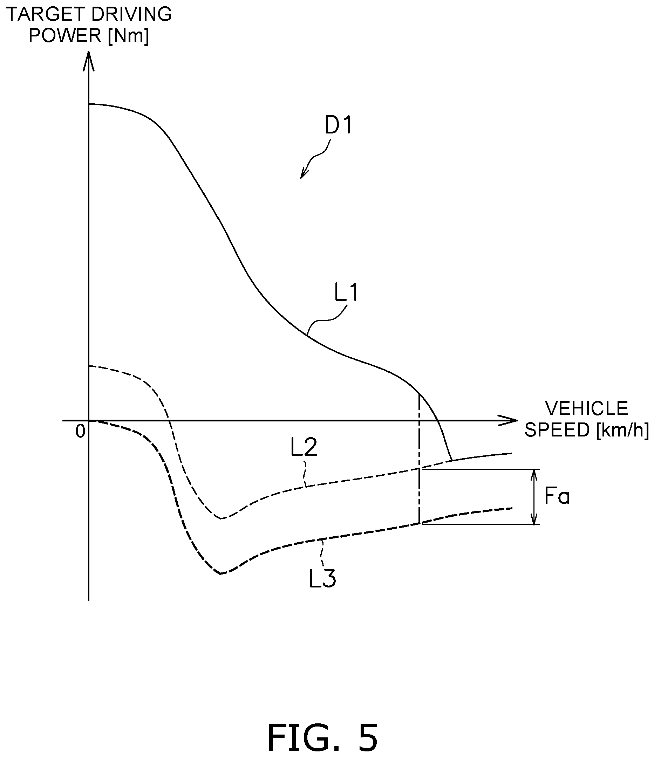

FIG. 5 illustrates the driving power data D1 based on the brake assist control. When the accelerator operating amount is 0% as described above and the brake assist control is not performed, the target driving power is determined from the driving power data L2. That is, when the accelerator operating amount and the brake operating amount are both 0%, the target driving power is determined from the driving power data L2.

In FIG. 5, the dashed line L3 depicts the driving power data D1 based on the brake assist control when the accelerator operating amount is 0%. That is, the driving power data L3 depicts the driving power data D1 when the accelerator operating amount is 0% and the brake operating amount is greater than 0%. As illustrated in FIG. 5, in the driving power data L3 based on the brake assist control, the braking power from the engine brake is increased by the assist braking power Fa as compared to the driving power data L2 in the case that the brake assist control is not performed. The process of the brake assist control executed by the controller 41 will be explained below.

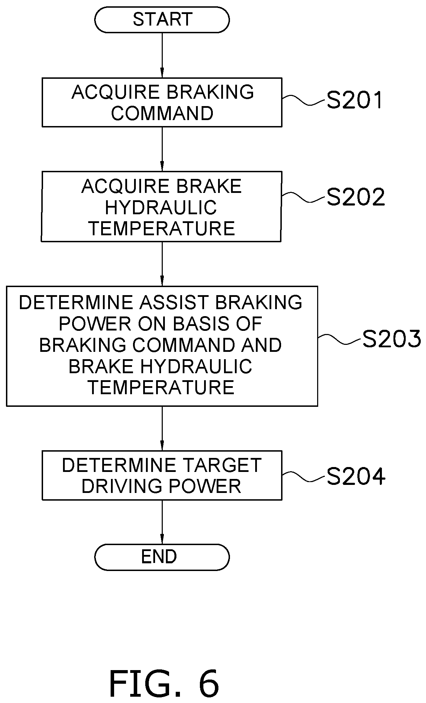

FIG. 6 is a flow chart illustrating a process for the brake assist control. In step S201 as illustrated in FIG. 6, the controller 41 acquires the braking command for braking the work machine 1. The controller 41 acquires the brake operating amount as the braking command.

In step S202, the controller 41 acquires the brake hydraulic temperature. For ease of explanation, the controller 41 acquires the brake hydraulic temperature of the front brakes 37A and 37B in this case. However, the controller 41 may acquire the brake hydraulic temperature of the rear brakes 37C and 37D.

In step S203, the controller 41 determines the assist braking power based on the braking command and the brake hydraulic temperature. That is, the controller 41 determines the assist braking power based on the brake operating amount and the brake hydraulic temperature. As indicated above, the assist braking power is the braking power from the engine brake for assisting the braking power of the hydraulic brakes 37A to 37D. A detailed method for determining the assist braking power is discussed below.

In step S204, the controller 41 determines the target driving power. The controller 41 determines the target driving power so as to achieve the assist braking power. The controller 41 generates the assist braking power by determining the target driving power in accordance with the abovementioned driving power data L3 for the brake assist control.

Next, a method for determining the assist braking power will be explained. The controller 41 stores assist braking data D3. The assist braking data D3 defines the relationship of the assist braking power with respect to the brake operating amount and the brake hydraulic temperature. The controller 41 refers to the assist braking data D3 to determine the assist braking power from the brake operating amount and the brake hydraulic temperature.

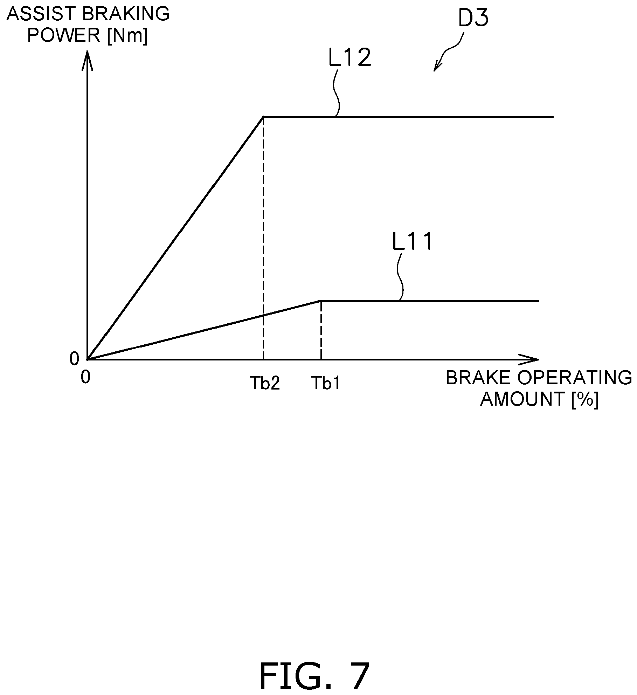

FIG. 7 illustrates an example of the assist braking data D3. In the assist braking data D3, the assist braking power increases in response to an increase in the brake operating amount. As illustrated in FIG. 7, the assist braking data D3 includes first braking power data L11 and second braking power data L12.

The first braking power data L11 is used when the brake hydraulic temperature is within a predetermined normal range. The first braking power data L11 defines an assist braking power that increases in response to an increase in the brake operating amount when the brake operating amount is less than a first threshold Tb1. The first braking power data L11 defines an assist braking power that is fixed regardless of an increase in the brake operating amount when the brake operating amount is equal to or greater than the first threshold Tb1.

The second braking power data L12 is used when the brake hydraulic temperature is in a predetermined high temperature range that is greater than the normal range. The second braking power data L12 defines an assist braking power that is greater than the first braking power data L11. Therefore, the controller 41 increases the assist braking power in accordance with an increase in the brake hydraulic temperature. The second braking power data L12 defines an assist braking power that increases in accordance with an increase in the brake operating amount when the brake operating amount is less than a second threshold Tb2. The second braking power data L12 defines an assist braking power that is fixed regardless of an increase in the brake operating amount when the brake operating amount is equal to or greater than the second threshold Tb2. The second threshold Tb2 is lower than the first threshold Tb1.

For example, the controller 41 determines the assist braking power from the brake operating amount based on the first braking power data L11 when the brake hydraulic temperature is equal to or less than a predetermined first temperature threshold. The controller 41 determines the assist braking power from the brake operating amount based on the second braking power data L12 when the brake hydraulic temperature is greater than the first temperature threshold.

The controller 41 determines the assist braking power from the brake operating amount based on the first braking power data L11 when the brake hydraulic temperature decreases from a temperature higher than the first temperature threshold to become equal to or less than a predetermined second temperature threshold. The second temperature threshold is less than the first temperature threshold. Alternatively, the second temperature threshold may be the same as the first temperature threshold.

When the switch between the first braking power data L11 and the second braking power data L12 is performed due to a change in the brake hydraulic temperature, the controller 41 may be provided with a limit to the amount of change per unit of time with respect to the difference between the first braking power data L11 and the second braking power data L12. Consequently, a sudden change in the assist braking power is suppressed when switching between the first braking power data L11 and the second braking power data L12.

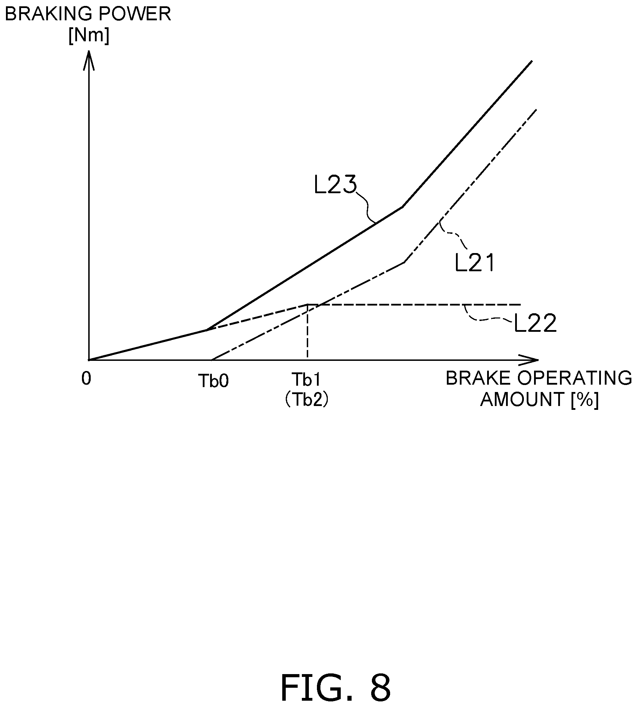

FIG. 8 illustrates the relationship between the brake operating amount and the braking power in the brake assist control. In FIG. 8, the chain double-dashed line L21 depicts the relationship between the brake operating amount and the braking power of the hydraulic brakes 37A to 37D. As indicated by the chain double-dashed line L21, the braking power of the hydraulic brakes 37A to 37D is 0 regardless of the brake operating amount when the brake operating amount is equal to or less than a threshold Tb0. That is, the range in which the brake operating amount is equal to or less than the threshold Tb0 is a play area in which the hydraulic brakes 37A to 37D do not operate. When the brake operating amount is greater than the threshold Tb0, the braking power of the hydraulic brakes 37A to 37D increases in accordance with an increase in the brake operating amount.

In FIG. 8, the dashed line L22 indicates the relationship between the brake operating amount and the assist braking power. When the brake hydraulic temperature is within the normal range indicated above, the assist braking power increases in response to the brake operating amount in accordance with the first braking power data L11 indicated in FIG. 7. When the brake hydraulic temperature is within the high temperature range indicated above, the assist braking power increases in response to the brake operating amount in accordance with the second braking power data L12 indicated in FIG. 7. The assist braking power increases in response to the increase in the brake operating amount even in the play area of the hydraulic brakes 37A to 37D. That is, the abovementioned thresholds Tb1 and Tb2 of the assist braking data D3 are greater than the threshold Tb0 of the play area of the hydraulic brakes 37A to 37D.

In FIG. 8, the solid line L23 indicates the total braking power of the braking power from the hydraulic brakes 37A to 37D and the assist braking power. As illustrated with the solid line L23, a braking power greater than the braking power (L21) of only the hydraulic brakes 37A to 37D can be achieved due to the assist braking power.

In the work machine 1 according to the present embodiment as discussed above, the assist braking power is determined based on the brake hydraulic temperature of the hydraulic brakes 37A to 37D. The braking power of the hydraulic brakes 37A to 37D is assisted by means of the assist braking power whereby the buildup of heat in the hydraulic brakes 37A to 37D is suppressed. Additionally, the assist braking power is achieved by means of the negative driving power, namely the engine brake, due to the engine 21 and the transmission 24. As a result, overheating of the hydraulic fluid of the hydraulic brakes 37A to 37D is suppressed.

Although an embodiment of the present invention has been described so far, the present invention is not limited to the above embodiment and various modifications may be made within the scope of the invention.

The work machine 1 is not limited to a wheel loader and may be another machine such as a bulldozer or a motor grader. The work machine 1 may be remotely operated. In this case, the FR operating member 42, the accelerator operating member 43, the work implement operating member 44, the brake operating member 45, and the input device 46 may be disposed outside the work machine 1.

The controller 41 may be configured by a plurality of controllers. The abovementioned processing of the control of the work machine 1 may distributed and executed among the plurality of controllers. The control method of the engine 21 is not limited to that of the above embodiment and may be modified.

The process of the brake assist control is not limited to the above embodiment and may be modified. For example, the travel command may be determined with the automatic control by the controller 41 without being limited to the accelerator operating amount. The braking command may be determined with the automatic control by the controller 41 without being limited to the brake operating amount. The controller 41 may modify the driving power data L2 in accordance with the hydraulic temperature.

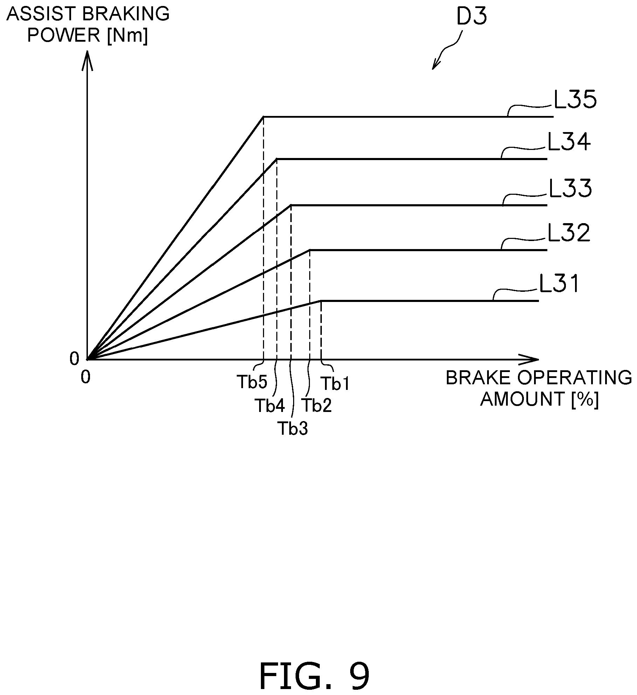

The assist braking data D3 is not limited to the above embodiment and may be changed. For example, the number of braking power data included in the assist braking data D3 is not limited to two and may be greater than two. FIG. 9 illustrates assist braking data according to a first modified example. As illustrated in FIG. 9, the assist braking data D3 includes a plurality of the braking power data L31 to L35 that is greater than two. The controller 41 may switch the plurality of the braking power data L31 to L35 in accordance with the brake hydraulic temperature.

Specifically, the assist braking data D3 according to the first modified example includes first to fifth braking power data L31 to L35. The temperature ranges of the corresponding brake hydraulic temperatures increase in order of the first to fifth braking power data L31 to L35. For example, the first braking power data L31 corresponds to the lowest temperature range. The fifth braking power data L35 corresponds to the highest temperature range. Thresholds Tb1 to Tb5 of the brake operating amounts of the respective braking power data L31 to L35 decrease in accordance with an increase in the corresponding temperature range. For example, the first threshold Tb1 of the first braking power data L31 is the highest and the fifth threshold Tb5 of the fifth braking power data L35 is the lowest.

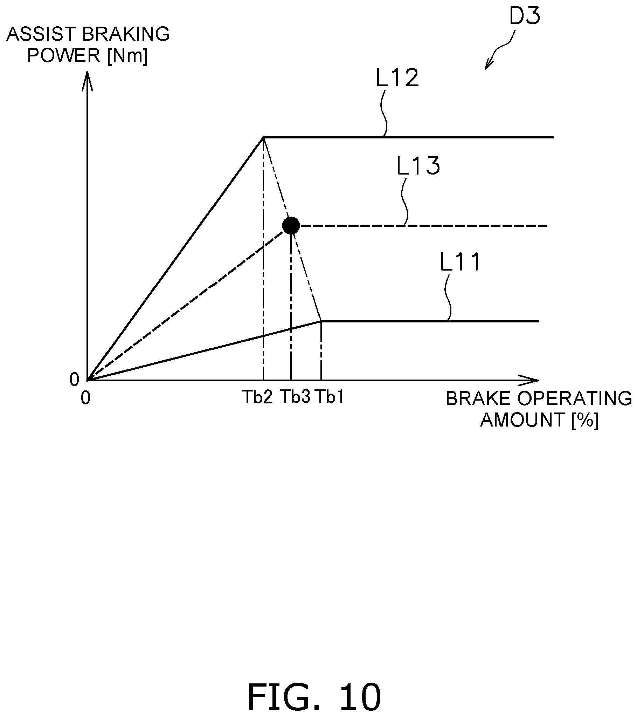

Alternatively, the controller 41 may derive the braking power data between the first braking power data L11 and the second braking power data L12 of the above embodiment by calculation. For example, FIG. 10 illustrates the assist braking data D3 according to a second modified example. As illustrated in FIG. 10, the controller 41 may derive a third threshold Tb3 in accordance with the brake hydraulic temperature and determine arbitrary braking power data L13 between the first braking power data L11 and the second braking power data L12 based on the third threshold Tb3. The controller 41 may determine the third threshold Tb3 by a proportional calculation based on, for example, the first threshold Tb1, the second threshold Tb2, and the brake hydraulic temperature.

### [Industrial Applicability]

According to the present disclosure, overheating of the hydraulic fluid of the hydraulic brakes is suppressed.

### [List of Reference Numerals]

- 1:: Work machine
- 21:: Engine
- 24:: Transmission
- 25:: Travel device
- 35:: Vehicle speed sensor
- 37A to 37D:: Hydraulic brake
- 39, 40:: Hydraulic temperature sensor
- 41:: Controller
- 45:: Brake operating member

## Claims

1. A work machine comprising:
an engine;
a transmission connected to the engine;
a travel device connected to the transmission and causing the work machine to travel;
a vehicle speed sensor that detects the vehicle speed;
a hydraulic brake that brakes the travel device by being driven by hydraulic fluid;
a hydraulic temperature sensor that detects a hydraulic temperature of the hydraulic fluid; and
a controller configured to
acquire a travel command for controlling a travel of the work machine,
acquire the vehicle speed,
determine a target driving power based on the travel command and the vehicle speed, the target driving power including a positive driving power for causing the work machine to travel and a negative driving power for braking the work machine,
control the engine and the transmission to achieve the target driving power,
acquire the hydraulic temperature,
determine, based on the hydraulic temperature, an assist braking power for assisting a braking power of the hydraulic brake, and
determine the target driving power to achieve the assist braking power.

2. The work machine according to claim 1, wherein
the controller is configured to increase the assist braking power in accordance with an increase in the hydraulic temperature.

3. The work machine according to claim 1, wherein
the controller is configured to
acquire a braking command for controlling the braking of the work machine, and
determine the assist braking power in accordance with the braking command.

4. The work machine according to claim 3, wherein
the controller is configured to
determine the assist braking power from the braking command based on first braking power data that defines a relationship between the braking command and the assist braking power in a case that the hydraulic temperature is within a first temperature range,
determine the assist braking power from the braking command based on second braking power data that defines a relationship between the braking command and the assist braking power in a case that the hydraulic temperature is within a second temperature range that is higher than the first temperature range, and
the second braking power data defines the assist braking power that is higher than the first braking power data.

5. The work machine according to claim 4, wherein
the first braking power data defines the assist braking power that increases in accordance with an increase in the braking command in a case that the braking command is up to a first threshold, and defines the assist braking power that is fixed regardless of an increase in the braking command in a case that the braking command is equal to or greater than the first threshold,
the second braking power data defines the assist braking power that increases in accordance with an increase in the braking command in a case that the braking command is up to a second threshold, and defines the assist braking power that is fixed regardless of an increase in the braking command in a case that the braking command is equal to or greater than the second threshold, and
the second threshold is lower than the first threshold.

6. The work machine according to claim 3, further comprising a brake operating member that is operable by an operator, wherein
the hydraulic brake generates the braking power in accordance with an operating amount of the brake operating member, and
the controller is configured to acquire the operating amount of the brake operating member as the braking command.

7. A method for controlling a work machine, the work machine including an engine, a transmission connected to the engine, a travel device connected to the transmission and causing the work machine to travel, and a hydraulic brake that brakes the travel device by being driven by hydraulic fluid, the method comprising:
acquiring a travel command for controlling the travel of the work machine;
acquiring a vehicle speed;
determining, based on the travel command and the vehicle speed, a target driving power that includes a positive driving power for causing the work machine to travel and a negative driving power for braking the work machine;
controlling the engine and the transmission to achieve the target driving power;
acquiring a hydraulic temperature of the hydraulic fluid;
determining, based on the hydraulic temperature, an assist braking power for assisting a braking power of the hydraulic brake; and
determining the target driving power to achieve the assist braking power.

8. The method according to claim 7, further comprising increasing the assist braking power in accordance with an increase in the hydraulic temperature.

9. The method according to claim 7, further comprising:
acquiring a braking command for controlling the braking of the work machine; and
determining the assist braking power in accordance with the braking command.

10. The method according to claim 9, further comprising:
determining the assist braking power from the braking command based on first braking power data that defines a relationship between the braking command and the assist braking power in a case that the hydraulic temperature is within a first temperature range; and
determining the assist braking power from the braking command based on second braking power data that defines a relationship between the braking command and the assist braking power in a case that the hydraulic temperature is within a second temperature range that is higher than the first temperature range, wherein
the second braking power data defines the assist braking power that is higher than the first braking power data.

11. The method according to claim 10, wherein
the first braking power data defines an assist braking power that increases in accordance with an increase in the braking command in a case that the braking command is up to a first threshold, and defines an assist braking power that is fixed regardless of an increase in the braking command in a case that the braking command is equal to or greater than the first threshold, and
the second braking power data defines an assist braking power that increases in accordance with an increase in the braking command in a case that the braking command is up to a second threshold, and defines an assist braking power that is fixed regardless of an increase in the braking command in a case that the braking command is equal to or greater than the second threshold, and
the second threshold is lower than the first threshold.

12. The method according to claim 9, wherein
the hydraulic brake generates the braking power in accordance with an operating amount of a brake operating member, and
the method comprises acquiring the operating amount of the brake operating member as the braking command.
